# FASCICULE DE BREVET EUROPEEN

(11) **EP 4 341 646 B1**
(45) Date de publication et mention de la délivrance du brevet: **30.04.2025**
(21) Numéro de dépôt: 22730963.0
(22) Date de dépôt: 18.05.2022
(51) Int. Cl.: G01D 5/353

(54) **DISPOSITIF D'INTERROGATION SPECTRAL DE LONGUEURS D'ONDES DE BRAGG**
SPEKTRALGERÄT ZUR ABFRAGE VON BRAGG-WELLENLÄNGEN
SPECTRAL DEVICE FOR INTERROGATING BRAGG WAVELENGTHS

(30) Priorité: 21.05.2021 FR 2105356
(43) Date de publication de la demande: 27.03.2024
(73) Titulaire: SAFRAN, 75015 Paris (FR)
(72) Inventeur: SALHI, Nassim, 77550 Moissy-Cramayel (FR); PHAN HUY, Minh Chau, 77550 Moissy-Cramayel (FR)
(74) Mandataire: Brevalex
(86) Numéro de dépôt international: PCT/FR2022/050948
(87) Numéro de publication internationale: WO 2022/243639

(56) Documents cités:
- CN-A- 101 765 031
- CN-A- 102 879 025
- JP-A- 2015 031 594
- US-A1- 2007 024 857
- ZHANG L ET AL: "In-Fiber Optic Sensors", January 2002, 20020101, PAGE(S) 1 - 60, ISBN: 978-0-8247-0732-3, XP002534197
- LLOYD G D ET AL: "RESONANT CAVITY TIME-DIVISION-MULTIPLEXED FIBER BRAGG GRATING SENSOR INTERROGATOR", IEEE PHOTONICS TECHNOLOGY LETTERS, IEEE, USA, vol. 16, no. 10, October 2004 (2004-10-01), pages 2323 - 2325, XP001217537, ISSN: 1041-1135, DOI: 10.1109/LPT.2004.834849
- DAKIN J P ET AL: "DISTRIBUTED AND MULTIPLEXED FIBRE GRATING SENSORS, INCLUDING DISCUSSION OF PROBLEM AREAS", IEICE TRANSACTIONS ON ELECTRONICS, INSTITUTE OF ELECTRONICS, TOKYO, JP, vol. E83-C, no. 3, 3 March 2000 (2000-03-03), pages 391 - 399, XP000945856, ISSN: 0916-8524

## Description

### Domaine Technique

La présente invention concerne le domaine des mesures (par multiplexage temporel) dans des fibres optiques à réseaux de Bragg et plus particulièrement, des interrogateurs spectraux de longueurs d'ondes de Bragg pouvant être utilisés dans des capteurs à fibres optiques.

### Etat de la technique antérieure

Dans le domaine de capteurs à fibres optique, on utilise très souvent des réseaux de Bragg pour extraire une information spectrale. Une des techniques d'extraction de mesure est la mesure par multiplexage temporel (TDM : Time Domain Multiplexing). Cette technique consiste à mesurer un par un les pics de Bragg issus d'une ligne à réseaux de Bragg. Cette méthode implique une mesure en série des pics qui ne sont pas coïncidents (chaque pic de Bragg est retardé temporellement par rapport au pic précédent).

Dans l'état de l'art, il existe principalement deux solutions à base de TDM. Une première solution consiste à faire une séparation temporelle par distanciation spatiale des réseaux de Bragg FBG (Fibre Bragg Grating).

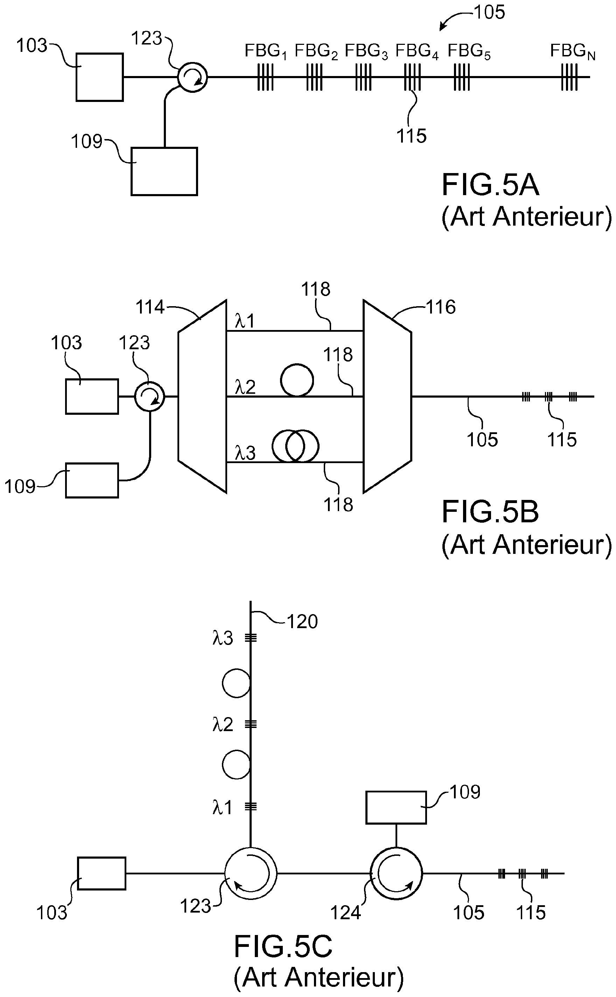

La Fig. 5A illustre très schématiquement un dispositif d'interrogation spectral à séparation temporelle par distanciation spatiale, selon l'art antérieur.

Le dispositif d'interrogation spectral comporte une source optique 103, une fibre optique de mesure 105, un circulateur 123 et un détecteur 109. Lorsqu'un signal lumineux est émis par la source optique 103, il est dirigé par le circulateur optique 123 vers la fibre optique de mesure 105. Cette dernière comprend plusieurs réseaux de Bragg 115 assez espacés spatialement afin de créer un écart temporel gérable par l'électronique du détecteur 109. Les pics de lumières reflétés par les différents réseaux de Bragg sont ensuite dirigés par le circulateur optique 123 vers le détecteur 109.

Ce dispositif est assez simple et ne nécessite pas d'éléments supplémentaires dans la chaine d'acquisition. Toutefois, il est nécessaire d'imposer une distance minimale entre deux réseaux de Bragg successifs typiquement de l'ordre d'au moins 1m. Par exemple, pour une source émettant un pulse lumineux de 30 ns, il est nécessaire que le retard temporel soit d'au moins 30 ns pour pouvoir distinguer deux pics de lumière consécutifs. En tenant compte du trajet de retour de deux pics réfléchis par deux réseaux de Bragg successifs, la distance entre ces deux réseaux de Bragg successifs doit correspondre à un retard de 15 ns. Compte tenu de la vitesse de lumière dans la silice, un retard de 15 ns correspond alors à une distance inter-réseaux de 3 m. En outre, une application classique comporte de manière générale, une quinzaine de réseaux de Bragg nécessitant par conséquent, une longueur de fibre d'au moins 45 m. En prenant une marge de sécurité de 10 % à 20 %, on aboutit à une longueur de fibre d'au moins 55 m. Ceci rend impossible ou très compliqué les applications à faible encombrement par exemple dans les aubes d'un moteur d'aéronef ou dans d'autres équipements ou installations de relativement faibles dimensions.

Afin de résoudre ce problème, il existe actuellement une deuxième solution qui propose une séparation temporelle par le biais d'un retard spectral. Cette solution consiste à imposer un retard dépendant de la longueur d'onde ou de la plage spectrale du signal lumineux. Cette méthode nécessite l'ajout d'un élément de discrimination spectrale ainsi qu'un élément de retard et peut être réalisée selon deux configurations.

La Fig. 5B illustre très schématiquement un dispositif d'interrogation spectral à séparation temporelle par des retards parallélisés, selon l'art antérieur.

Le dispositif d'interrogation spectral par des retards parallélisés selon cette première configuration comporte une source optique 103, deux modules de démultiplexage-multiplexage 114, 116, un ensemble de fibres optiques à retards 118 parallélisés, une fibre optique de mesure 105, un circulateur optique 123 et un détecteur 109.

Le signal lumineux émis par la source optique 103 est décomposé en N voies spectrales via le premier module de démultiplexage-multiplexage 114. A chacune des voies est associée une longueur de trajet croissante. La voie 1 parcourra une longueur L₁, la voie 2 une longueur L₂ supérieure à L₁, ..., et la voie N une longueur L_{N} supérieur à L_{N-1}.

La différence entre deux longueurs successives est choisie pour que l'électronique du détecteur 109 soit capable de discriminer les signaux provenant de deux voies spectrales différentes.

Les N voies spectrales sont ensuite recombinées par le deuxième module de démultiplexage-multiplexage 116 avant d'être dirigées vers la fibre optique de mesure 105 comprenant plusieurs réseaux de Bragg 115. Les pics de lumières reflétés par les réseaux de Bragg parcourent les chemins inverses avant d'être dirigés par le circulateur 123 vers le détecteur 109.

La Fig. 5C illustre très schématiquement un dispositif d'interrogation spectral à séparation temporelle par des retards en série, selon l'art antérieur.

Le dispositif d'interrogation spectral par des retards en série selon cette deuxième configuration comporte une source optique 103, deux circulateurs optiques 123, 124, une ligne de fibre optique de retards 120 en série, une fibre optique de mesure 105, et un détecteur 109.

La ligne de fibre optique de retards 120 en série comporte des réseaux de Bragg 115 à des longueurs d'onde différentes. Chaque réseau de Bragg est un réflecteur dans une certaine bande spectrale. La distance entre deux réseaux de Bragg assure ainsi le retard entre deux voies spectrales.

Un signal lumineux émis par la source optique 103 est dirigé par le premier circulateur optique 123 vers la ligne de fibre optique de retards 120 en série. Les différentes voies reflétées par les différentes réseaux de Bragg sont ensuite dirigées par le deuxième circulateur optique 124 vers la fibre optique de mesure 105 et au retour vers le détecteur 109.

Toutefois, la séparation temporelle par le biais d'un retard spectral parallélisé ou en série nécessite d'avoir des fibres optiques dont les longueurs sont relativement importantes pour pouvoir générer un retard entre les mesures de réseaux de Bragg. Il faut typiquement plusieurs dizaines de mètres. En outre, il résulte une contrainte de positionnement spectral des réseaux nécessitant de faire coïncider avec précision la longueur d'onde de chacun des réseaux de Bragg avec une plage spectrale définie.

De plus, le nombre de réseaux de Bragg ainsi que le retard entre réseaux de Bragg sont figés par construction dans tous les dispositifs d'interrogation spectral de l'état de l'art. Il n'est pas possible d'adapter les retards imposés par construction en fonction des retards nécessaires pour différentes applications. On notera qu'une application donnée est définie par un certain nombre de paramètres comprenant le nombre de réseaux de Bragg, les longueurs d'ondes des réseaux de Bragg et l'espacement spatial entre ces réseaux. Ainsi, si on change d'application, il faudra modifier toute la configuration matérielle pour avoir des paramètres adaptés à la nouvelle application.

Zhang et al, "In-Fiber Optic Sensors", le quatrième chapitre d'un ouvrage de 2002 référencé sous le numéro ISBN: 978-0-8247-0732-3, contient une revue des différentes mises en œuvre possibles de mesures à l'aide de réseaux de Bragg (FBGs), dont en particulier des techniques de multiplexing, par exemple WDM ou TDM. Ce chapitre divulgue par exemple un dispositif d'interrogation spectral de longueurs d'ondes de Bragg, comportant:
- au moins une source optique configurée pour émettre un signal lumineux,
- au moins une fibre optique de mesure comprenant une suite de réseaux de Bragg successifs configurés pour réfléchir le signal lumineux selon des bandes de longueurs d'ondes différentes, et
- au moins un détecteur de longueurs d'ondes.

L'article de Lloyd et al, "Resonant Cavity Time-Division-Multiplexed Fiber Bragg Grating Sensor Interrogator", IEEE Photonics Technology Letters, vol. 16, no. 10, octobre 2004, pages 2323-2325, ISSN: 1041-1135, DOI: 10.1109/LPT.2004.834849 décrit un dispositif de mesure TDM permettant la détection de retour de signaux lumineux réfléchis par des FBGs de même longueurs d'onde. Cet article enseigne une cavité résonante de type TDM comprenant un bras comprenant un réflecteur total. Une impulsion lumineuse introduite dans la cavité induit des réponses des FBGs qui sont ensuite amplifiées par un amplificateur optique SOA; les signaux amplifiées peuvent ensuite être plus facilement discriminés du signal de base et donc détectés.

CN 101 765 031 A, CN 102 879 025 A et JP 2015 031594 A décrivent une technique mêlant WDM et TDM pour l'interrogation de plusieurs fibres optiques comprenant chacune une série de FBGs. CN 101 765 031 A utilise des switchs optiques pour choisir le groupe de fibres optiques interrogées. Dans chaque groupe de fibres optiques, un retard temporel est introduit pour permettre la discrimination des différentes fibres et des différents FBGs. CN 102 879 025 A et JP 2015 031594 A fonctionnent de façon similaire avec un switch optique et des boucles de retard.

US 2007/024857 A1 fonctionne sur un principe différent d'interrogation d'une succession de FBGs sur la base d'une interférométrie.

L'article de Dakin et al, "Distributed and Multiplexed Fibre Grating Sensors, including discussion of problem areas", IEICE Transactions on Electronics, Institute of Electronics, vol. E83-C, no. 3, 3 mars 2000, pages 391-399, ISSN: 0916-8524, décrit un système différent d'interrogation d'un seul FBG de grande taille à l'aide d'un interféromètre de Michelson, qui comprend un bras optique avec une réflecteur total.

L'objet de la présente invention est de remédier aux inconvénients précités en proposant un dispositif d'interrogation spectral permettant de mesurer successivement des bandes de longueurs d'ondes de Bragg d'au moins une fibre optique de manière précise, robuste et flexible où les paramètres peuvent être adaptés à l'application.

### Présentation de l'invention

L'invention a pour objet un dispositif d'interrogation spectral de longueurs d'ondes de Bragg, comportant :
- au moins une source optique configurée pour émettre un signal lumineux,
- au moins une fibre optique de mesure comprenant une suite de réseaux de Bragg successifs configurés pour réfléchir le signal lumineux selon des bandes de longueurs d'ondes différentes,
- au moins une fibre optique de réflexion comprenant un élément de réflexion totale,
- au moins un détecteur de longueurs d'ondes, et
- au moins un switch optique configuré pour commuter le passage du signal lumineux entre ladite au moins une source optique, ladite au moins une fibre optique de mesure, ladite au moins une fibre optique de réflexion, et ledit au moins un détecteur selon une séquence de trois modes opératoires comprenant un premier mode, dit mode de démarrage, dans lequel le signal lumineux émis par une source optique donnée est guidé depuis ladite source optique vers une fibre optique de mesure correspondante, un deuxième mode, dit mode de mesure, dans lequel ledit signal lumineux est guidé pour faire un nombre prédéterminé d'aller-retour dans une ligne formée par un couplage entre ladite fibre optique de mesure et une fibre optique de réflexion correspondante, générant ainsi un retard prédéterminé entre les réseaux de Bragg successifs, et un troisième mode, dit mode de détection, dans lequel ledit signal lumineux est guidé vers un détecteur correspondant qui est configuré pour mesurer successivement les bandes de longueurs d'ondes associées aux réseaux de Bragg compris dans ladite fibre de mesure.

Ce dispositif permet de mesurer successivement les bandes de longueurs d'ondes de Bragg d'au moins une fibre optique de manière précise, robuste et flexible. Il permet de fortement diminuer la contrainte sur la distance entre deux réseaux de Bragg successifs. Le choix des bandes de longueurs d'ondes des réseaux de Bragg est arbitraire, il n'est pas obligatoire qu'ils se trouvent au centre d'un intervalle donné. En outre, il est peu gourmand en longueur de fibre optique, la fibre optique de mesure sert elle-même de retardateur.

Avantageusement, le dispositif comporte au moins un driver paramétrable configuré pour commander la commutation du switch optique lors des modes de démarrage, de mesure et de détection selon des paramètres prédéterminés.

Ainsi, le dispositif est dynamique de sorte qu'il est facilement adaptable à différents types d'applications.

Avantageusement, ledit au moins un driver paramétrable est configuré pour contrôler le nombre prédéterminé d'aller-retour du signal lumineux lors du mode de mesure en fonction de la distance entre les réseaux de Bragg et la cadence de mesure du détecteur.

Ainsi, en adaptant le nombre d'aller-retour selon le retard souhaité entre les réseaux de Bragg successifs, le dispositif peut présenter une distance minimale entre deux réseaux de Bragg consécutifs pouvant ainsi être installé dans des équipements de tailles réduits.

Avantageusement, ladite au moins une source optique est une source de signaux lumineux à large bande spectrale dont la largeur est entre environ 10 nm et environ 150 nm, la période d'un pulse de lumière étant comprise entre environ 10 ns et environ 100 ns.

Avantageusement, ladite au moins une source optique est une source à spectre large (ex : SLED ou ASE) configurée pour émettre à chaque instant d'émission, un signal lumineux comprenant toutes les longueurs d'ondes de la bande spectrale.

Avantageusement, le dispositif comporte des longueurs supplémentaires de fibres optiques configurées pour tenir compte du temps de propagation du signal lumineux ainsi que du temps de commutation du switch optique.

Ceci permet de laisser une marge d'incertitude pour ne pas être à la nanoseconde près et pour être sûr qu'on ne coupe pas le train au milieu.

Selon un premier mode de réalisation, le dispositif comporte au moins un circulateur configuré pour coupler ladite fibre optique de mesure à ladite source correspondante lors du mode de démarrage et pour coupler ladite fibre optique de mesure audit détecteur correspondant lors du mode de détection.

Avantageusement, ledit au moins un switch optique est configuré pour commuter le passage du signal lumineux selon deux commutations dont une première commutation dans laquelle ladite fibre optique de mesure est connectée à ladite source correspondante via le circulateur correspondant conformément au mode de démarrage, une deuxième commutation dans laquelle ladite fibre optique de mesure est connectée à ladite fibre optique de réflexion correspondante conformément au mode de mesure, et un retour à la première commutation, dans laquelle ladite fibre optique de mesure est connectée audit détecteur correspondant via ledit circulateur conformément au mode de détection.

Avantageusement, le dispositif comporte :
- un ensemble de N premières voies de fibres optiques, dont chacune comporte une source, un circulateur, et un détecteur,
- un ensemble de N deuxièmes voies de fibres optiques, dont chacune correspond à une fibre optique de réflexion,
- un ensemble de M troisièmes voies de fibres optiques, dont chacune correspond à une fibre optique de mesure, et
ledit au moins switch optique est un switch optique multiple configuré pour connecter entre eux les différentes premières voies, deuxièmes voies et troisièmes voies selon lesdits modes de démarrage, de mesure et de détection et en associant ledit ensemble de N premières voies audit ensemble de N deuxièmes voies pour interroger les réseaux de Bragg compris dans ledit ensemble de M troisièmes voies.

Selon un deuxième mode de réalisation, ledit au moins un switch optique est configuré pour commuter le passage du signal lumineux selon trois connexions dont une première connexion dans laquelle ladite fibre optique de mesure est connectée à ladite source correspondante conformément au mode de démarrage, une deuxième connexion dans laquelle ladite fibre optique de mesure est connectée à une fibre optique de réflexion correspondante conformément au mode de mesure, et une troisième connexion, dans laquelle ladite fibre optique de réflexion est connectée audit détecteur correspondant conformément au mode de détection.

Avantageusement, le dispositif comporte :
- un ensemble de N premières voies de fibres optiques, dont chacune comporte une source,
- un ensemble de N deuxièmes voies de fibres optiques, dont chacune correspond à une fibre optique de réflexion,
- un ensemble de M troisièmes voies de fibres optiques, dont chacune correspond à une fibre optique de mesure, et
- un ensemble de N quatrième voies de fibres optiques, dont chacune comporte un détecteur, et
   ledit au moins un switch optique est un switch multiple configuré pour connecter entre eux les différentes premières voies, deuxièmes voies, troisièmes voies et quatrièmes voies selon lesdits modes de démarrage, de mesure et de détection et en associant ledit ensemble de N premières voies audit ensemble de N deuxièmes voies et audit ensemble de N quatrième voies pour interroger les réseaux de Bragg compris dans ledit ensemble de M troisièmes voies.

L'invention vise également un capteur comportant un dispositif selon l'une quelconque des caractéristiques précédentes, ledit capteur étant configuré pour mesurer un paramètre physique à partir des variations des bandes de longueurs d'ondes de Bragg.

D'autres avantages et caractéristiques de l'invention apparaîtront dans la description détaillée non limitative ci-dessous.

### Brève description des figures

On décrira à présent, à titre d'exemples non limitatifs, des modes de réalisation de l'invention, en se référant aux dessins annexés, dans lesquels :

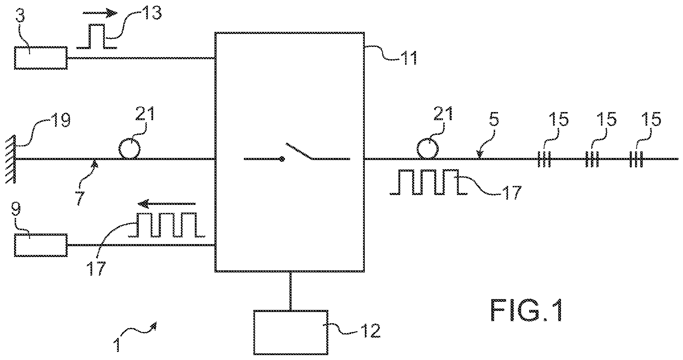

[Fig. 1] illustre très schématiquement un dispositif d'interrogation spectral de longueurs d'ondes de Bragg, selon un mode de réalisation de l'invention ;
[Fig. 2A]
[Fig. 2B]

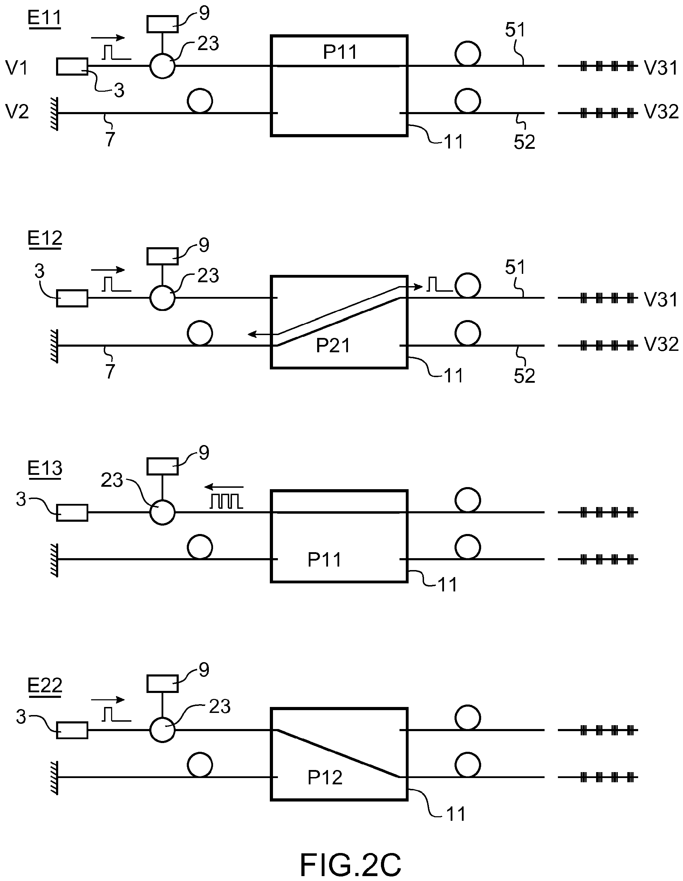

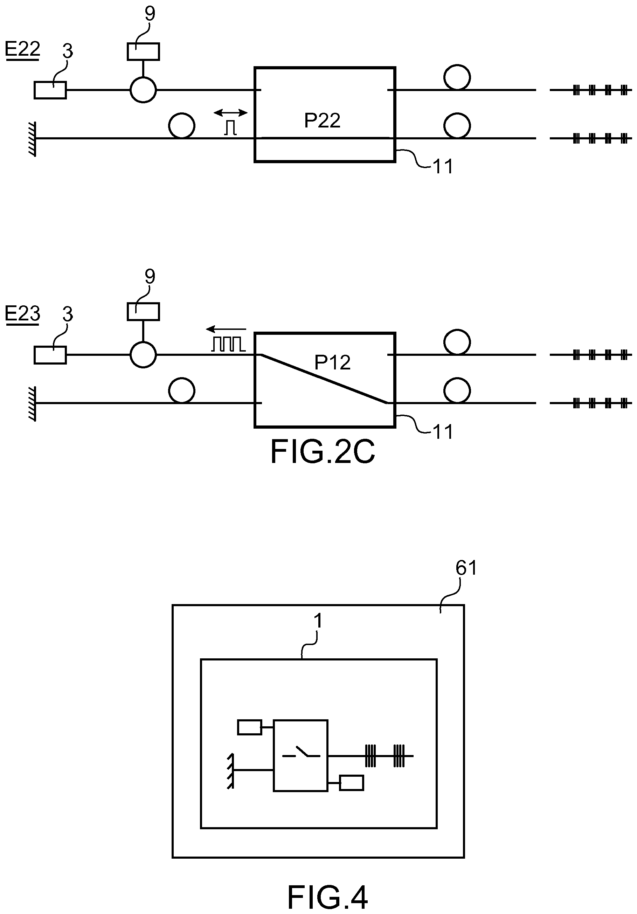

[Fig. 2C] illustrent très schématiquement des variantes d'un dispositif d'interrogation spectral, selon un premier mode préféré de réalisation de l'invention ;
[Fig. 3A]
[Fig. 3B] illustrent très schématiquement des variantes d'un dispositif d'interrogation spectral, selon un deuxième mode préféré de réalisation de l'invention ;
[Fig. 4] illustre de manière schématique un capteur de mesure d'un paramètre physique par réseaux de Bragg, selon un mode de réalisation de l'invention ;
[Fig. 5A] illustre très schématiquement un dispositif d'interrogation spectral à séparation temporelle par distanciation spatiale, selon l'art antérieur ; et
[Fig. 5B]
[Fig. 5C] illustrent très schématiquement des dispositifs d'interrogation spectral à séparation temporelle par des retards parallélisés et en série respectivement, selon l'art antérieur.

### Description des modes de réalisation

Le principe de l'invention est de réaliser une séparation temporelle par un rebond du signal optique pour augmenter le retard entre les réseaux de Bragg. Plus particulièrement, l'invention propose de coupler les réseaux de Bragg de mesure avec un réflecteur fixe et de faire autant d'aller-retour qu'il faut pour augmenter artificiellement la distance entre les réseaux. Ceci augmente le retard temporel et permet ainsi, à un détecteur de discriminer les signaux provenant des différents réseaux de Bragg.

La Fig. 1 illustre très schématiquement un dispositif d'interrogation spectral de longueurs d'ondes de Bragg, selon un mode de réalisation de l'invention.

Le dispositif d'interrogation spectral 1 comporte au moins une source optique 3, au moins une fibre optique de mesure 5, au moins une fibre optique de réflexion 7, au moins un détecteur 9, au moins un switch optique 11, et au moins un driver paramétrable 12.

Chaque source optique 3 (la figure 1 n'en montre qu'une seule) est configurée pour émettre un signal lumineux (par exemple, un pulse de lumière) 13 à large bande spectrale. Avantageusement, la largeur spectrale d'un signal lumineux 13 est entre environ 10 nm et environ 150 nm. La période d'un signal lumineux 13 peut être comprise entre environ 10 ns et environ 100 ns.

A titre d'exemple, la source optique 3 est une SLED (diode superluminescente) ou ASE (source à émission spontanée amplifiée) configurée pour émettre à chaque instant d'émission, un signal lumineux 13 comprenant toutes les longueurs d'ondes de la bande spectrale.

Chaque fibre optique de mesure 5 (la figure 1 n'en montre qu'une seule) comprend une suite de réseaux de Bragg FBG 15 successifs configurés pour réfléchir le signal lumineux 13 selon des bandes 17 ou pics de longueurs d'ondes différentes.

On notera qu'un réseau de Bragg 15 est une modulation locale de l'indice de réfraction formant un réflecteur sélectif en longueurs d'ondes. Chaque réseau de Bragg 15 correspond à une longueur d'onde ou plutôt à un intervalle ou bande 17 de longueurs d'ondes. Ainsi, un réseau de Bragg 15 est une sorte de filtre passe bande qui fait passer toutes les bandes 17 de longueurs d'ondes du signal lumineux 13 à part une bande (ou un pic) qui est réfléchie. Les différentes bandes 17 de longueurs d'ondes sont multiplexées dans la fibre optique de mesure 5.

Par ailleurs, chaque fibre optique de réflexion 7 (la figure 1 n'en montre qu'une seule) comprend un élément de réflexion totale 19. Par exemple, un miroir 19 totalement réfléchissant (i.e. >99%) est installé sur une extrémité de la fibre optique de réflexion 7.

Chaque détecteur 9 (la figure 1 n'en montre qu'un seul) est configuré pour mesurer les bandes 17 de longueurs d'ondes associées aux différents réseaux de Bragg 15. A titre d'exemple, le détecteur 9 peut être de type analyseur de spectre optique OSA (Optical Spectrum Analyser) ou un appareil de mesure de longueur d'onde (wavemeter) ou un photo détecteur (photo transistor, photodiode, photodiode à avalanche) permettant de mesurer les différents pics de Bragg.

Le au moins un switch optique 11 (la figure 1 n'en montre qu'un seul) est contrôlé de manière électronique par le driver paramétrable 12 et est avantageusement très rapide avec un temps de commutation inférieur à environ 100 ns et dont les pertes d'insertion sont assez faibles de l'ordre de 1dB ou moins.

Le switch optique 11 est configuré pour commuter le passage du signal lumineux 13 entre la ou les source(s) optique(s) 3, la ou les fibre(s) optique(s) de mesure 5, la ou les fibre(s) optique(s) de réflexion 7, et le ou les détecteur(s) 9 selon une séquence de trois modes opératoires consécutifs. Ces modes opératoires comportent des premier, deuxième et troisième modes, dits modes de démarrage, de mesure, et de détection, respectivement. On notera que la commutation du switch optique 11 est commandée par le driver paramétrable 12 lors de ces modes de démarrage, de mesure et de détection selon des paramètres prédéterminés.

Lors du mode de démarrage, le signal lumineux 13 émis par une source optique 3 donnée est guidé depuis cette source optique 3 vers une fibre optique de mesure 5 correspondante.

Ensuite, lors du mode de mesure, le signal lumineux 13 est confiné dans une ligne formée par un couplage entre la fibre optique de mesure 5 et une fibre optique de réflexion 7 correspondante pour faire un nombre prédéterminé d'aller-retour. La propagation du signal lumineux 13 selon ce mouvement de va-et-vient pendant une durée prédéterminée entre la suite de réseaux de Bragg 15 de la fibre optique de mesure 5 et l'élément totalement réfléchissant 19 au bout de la fibre optique de réflexion 7 génère un retard prédéterminé entre les réseaux de Bragg 15 successifs.

Plus particulièrement, le driver paramétrable 12 est configuré pour contrôler le nombre prédéterminé d'aller-retour du signal lumineux 13 (ou la durée prédéterminée) lors du mode de mesure en fonction de la distance entre les réseaux de Bragg 15 et la cadence de mesure du détecteur 9.

Par exemple, pour un dispositif d'interrogation 1 comportant une source optique 3 émettant un pulse de lumière 13 dont la période est de 10ns, et une fibre optique de mesure 5 dont la distance entre deux réseaux de Bragg successifs est de 15 cm qui correspond à un décalage temporel de 1.5ns, le nombre prédéterminé est paramétré pour au moins sept aller-retour. En effet, afin que les bandes de longueurs d'ondes correspondant à deux réseaux de Bragg successifs ne se recouvrent pas, il est nécessaire que le décalage temporel soit supérieur à 10ns, c'est-à-dire, supérieur à environ 7 fois 1.5ns. Ainsi, lorsque le pulse de lumière 13 fait au moins sept allers-retours entre chaque deux réseaux de Bragg successifs, le détecteur 9 peut facilement discriminer les signaux des différents réseaux de Bragg.

Avantageusement, pour ne pas être à la nanoseconde près, le dispositif d'interrogation 1 comporte des longueurs supplémentaires 21 de fibres optiques. Ces longueurs supplémentaires 21 sont configurées pour tenir compte du temps de propagation du signal lumineux 13 ainsi que du temps de commutation du switch optique 11.

Finalement, lors du mode de détection, les bandes 17 de longueurs d'ondes du signal lumineux 13 sont guidées vers un détecteur 9 correspondant. Ce détecteur 9 est configuré pour mesurer successivement ces bandes 17 de longueurs d'ondes associées aux réseaux de Bragg 15 inscrits dans la fibre optique de mesure 5.

Ainsi, le dispositif d'interrogation 1 selon l'invention dilate de manière fonctionnelle et modulable la distance entre deux réseaux de Bragg 15 successifs en créant de manière astucieuse un mouvement de va-et-vient entre les réseaux de Bragg 15 eux-mêmes.

On notera qu'une perte de puissance typique d'un switch optique rapide est de l'ordre de 0.6 dB ce qui représente 1.2 dB pour un aller-retour. Si l'on se fixe une limite de perte de puissance d'environ 10 dB à 15 dB, cela correspond à un total d'environ 10 allers-retours. Cette limite de 10 dB à 15 dB est uniquement à titre indicatif, elle peut être augmentée si l'on utilise un détecteur très sensible de type APD et/ou si on utilise une source ayant une plus grande puissance.

Par exemple, considérant l'application décrite en référence à la Fig. 5A de l'art antérieur mettant en œuvre une source optique émettant un pulse lumineux de 30 ns. Pour créer un retard de 15 ns correspondant à un retard total de 3 m entre deux réseaux de Bragg successifs et en réalisant 10 allers-retours, il suffit que la distance minimale entre ces deux réseaux de Bragg successifs soit 0.3 m. En prenant une marge de sécurité de 10 % à 20 %, on aboutit à une distance inter-réseaux d'environ 35 cm. En augmentant le nombre d'allers-retours, on peut diminuer encore davantage la distance entre les réseaux de Bragg.

On notera que malgré le fait que la Fig. 1 ne montre qu'un seul switch optique, il est bien entendu, envisageable que le dispositif d'interrogation puisse comprendre plusieurs switches optiques indépendants et fonctionnant en parallèle. Selon un premier cas, les switches optiques peuvent partager le même driver paramétrable avec une séquence commune de commutation. Selon un deuxième cas, chacun des switches dispose de son propre driver paramétrable et ainsi, de sa propre séquence de commutation. Le nombre maximal de switches dépend uniquement de l'encombrement du dispositif d'interrogation.

Uniquement à titre d'exemples non limitatifs et pour des raisons de clarté, on ne considère dans la suite de la description, que des dispositifs d'interrogation comportant chacun un seul switch optique simple ou multiple et un seul driver.

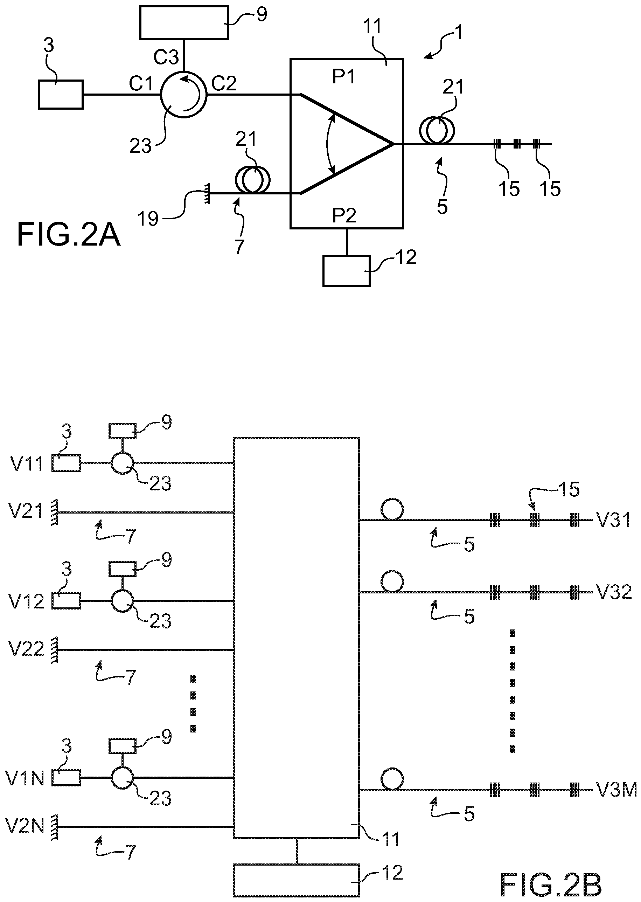

Les Figs. 2A-2C illustrent très schématiquement des variantes d'un dispositif d'interrogation spectral, selon un premier mode préféré de réalisation de l'invention.

Selon ce premier mode de réalisation, le dispositif d'interrogation spectral 1 comporte au moins un circulateur optique 23 configuré pour coupler chaque fibre optique de mesure 5 à une source optique 3 correspondante lors du mode de démarrage et pour coupler ensuite la fibre optique de mesure 5 au détecteur 9 correspondant lors du mode de détection.

Le switch optique 11 est configuré pour commuter le passage du signal lumineux 13 selon deux commutations. Lors de la première commutation la fibre optique de mesure 5 est connectée à la source optique 3 correspondante via le circulateur 23 correspondant conformément au mode de démarrage. Lors de la deuxième commutation la fibre optique de mesure 5 est connectée à la fibre optique de réflexion 7 correspondante conformément au mode de mesure. Ensuite, le switch optique 11 fait un retour à la première commutation, dans laquelle la fibre optique de mesure 5 est connectée au détecteur 9 correspondant via le circulateur 23 conformément au mode de détection.

Plus particulièrement, la Fig. 2A montre un schéma synoptique d'un dispositif d'interrogation spectral 1 comportant une seule source optique 3, une fibre optique de mesure 5, une fibre optique de réflexion 7, un détecteur 9, un circulateur optique 23, un switch optique 11, et un driver paramétrable 12.

Lors de la première commutation, le switch optique 11 est par défaut sur la position P1. Ainsi, lorsqu'un signal lumineux 13 large bande est émis par la source optique 3, ce signal lumineux va du port C1 au port C2 du circulateur optique 23 et passe via le switch optique 11 vers la fibre de mesure 5 comprenant la suite de réseaux de Bragg 15.

Lors de la deuxième commutation, le switch optique 11 passe en position P2. Alors, le signal lumineux est réfléchi sur les réseaux de Bragg 15 et retourne vers la fibre de réflexion 7 comprenant l'élément totalement réfléchissant 19. Le signal lumineux fait des allers-retours dans la cavité formée par le couplage entre les fibres optiques de mesure 5 et de réflexion 7. A chaque aller-retour, le retard temporel entre deux réseaux de Bragg 15 successifs augmente. Le nombre nécessaire d'allers-retours dépend de la distance entre les réseaux de Bragg 15 ainsi que de la cadence de mesure du détecteur 9.

Lorsque le nombre minimal d'allers-retours est atteint, le switch optique 11 retourne à la première commutation en rebasculant en position P1. Le signal lumineux est alors dirigé vers le port C3 du circulateur optique 23 pour être détectée par le détecteur 9.

La Fig. 2B montre un schéma synoptique d'un dispositif d'interrogation spectral 1 comportant N sources optiques 3, N fibres optique de réflexion 7, N détecteurs 9, N circulateurs 23, M fibres optiques de mesure 5, un switch optique 11, et un driver paramétrable 12.

Selon cet exemple, le dispositif d'interrogation 1 comporte un ensemble de N premières voies V11-V1N de fibres optiques, un ensemble de N deuxièmes voies V21-V2N de fibres optiques, un ensemble de M troisièmes voies V31-3M de fibres optiques et un switch optique multiple 11 contrôlé par le driver paramétrable 12. N est un entier supérieur ou égal à 1 et M est un entier supérieur ou égal à N. On notera que le switch optique multiple 11 peut être remplacé par une pluralité de switches indépendants contrôlés par un driver commun ou par une pluralité de drivers multiples. Bien entendu, on peut également avoir plusieurs switches multiples.

Chaque voie de l'ensemble de N premières voies V11-V1N de fibres optiques comporte une source optique 3, un circulateur optique 23, et un détecteur 9. L'ensemble de N deuxièmes voies V21-V2N de fibres optiques correspondent à N fibres optiques de réflexion 7. L'ensemble de M troisièmes voies V31-V3M de fibres optiques correspondent à M fibres optiques de mesure 5.

A titre d'exemple, le switch optique 11 est un switch multiple à 2NxM bras dont 2N bras sont compris dans un premier côté du switch et les autres M bras sont compris dans un deuxième côté du switch multiple 11. Ce switch optique multiple 11 est configuré pour connecter entre eux les différentes premières voies V11-V1N, deuxièmes voies V21-V2N et troisièmes voies V31-V3M selon les trois modes de démarrage, de mesure et de détection. Plus particulièrement, le switch multiple associe l'ensemble de N premières voies V11-V1N à l'ensemble de N deuxièmes voies V21-V2N pour interroger les réseaux de Bragg 15 compris dans l'ensemble de M troisièmes voies. Chaque première voie est associée à une deuxième voie correspondante pour interroger un sous ensemble de l'ensemble de M troisièmes voies V31-V3M de sorte que tout l'ensemble de M troisièmes voies V31-V3M fini par être interrogé. Ceci permet de réaliser M séries consécutives des trois modes opératoires dont chaque série comporte un mode de démarrage, un mode de mesure et un mode de détection.

Bien entendu, d'autres configurations ou combinaisons hybrides peuvent être réalisées selon ce premier mode de réalisation en fonction du nombre de bras des premier et second côtés du switch optique 11 utilisé.

La Fig. 2C est un exemple montrant les étapes de fonctionnement d'un dispositif d'interrogation spectral 1 dans le cas où N=1 et M=2.

Ainsi, selon cet exemple, le dispositif d'interrogation spectral 1 comporte une première voie V1 comprenant une source optique 3, un circulateur optique 23, et un détecteur 9 ; une deuxième voie V2 correspondant à une fibre optique de réflexion 7 ; un switch optique 11 multiple 2x2 ; et deux troisièmes voies V31, V32 correspondant à des première 51 et deuxième 52 fibres optiques de mesure comprenant des première et deuxième suites de réseaux de Bragg 15 respectivement. Le switch optique 2x2 est configuré pour connecter les première V1 et deuxième V2 voies du premier côté du switch optique 11 aux deux troisièmes voies V31, V32 du second côté. On notera que lorsque le switch optique 11 est dit en position Pij cela signifie que la ième voie au niveau du premier côté du switch optique 11 est connectée au jème voie au niveau du deuxième côté du switch optique 11 sachant que dans cet exemple, i=1 ou 2, et j=1 ou 2.

Le fonctionnement se déroule en deux périodes selon deux séries consécutives des trois modes opératoires de démarrage, de mesure et de détection. Dans la première période (correspondant à une première série des trois modes opératoires), la première fibre optique de mesure 51 comprenant la première suite de réseaux de Bragg est interrogée selon les étapes E11-E13 suivantes :
A l'étape E11 (correspondant à un premier mode de démarrage), le switch optique 11 est en position P11 pour guider le signal lumineux sur la première fibre optique de mesure 51 comprenant la première suite de réseaux de Bragg.

A l'étape E12 (correspondant à un premier mode de mesure), le switch optique 11 est commuté en position P21 afin que le signal lumineux fasse des allers-retours entre le miroir 19 compris dans la fibre optique de réflexion 7 et la première suite de réseaux de Bragg comprise dans la première fibre optique de mesure 51.

A l'étape E13 (correspondant à un premier mode de détection), le switch optique 11 est re-commuté en position P11 afin que le signal lumineux aille vers le détecteur 9 via le circulateur 23.

Dans un second temps (étapes E21-E23), la deuxième fibre optique de mesure 51 comprenant la deuxième suite de réseaux de Bragg est interrogée selon les étapes E21-E23 suivantes :
A l'étape E21 (correspondant à un second mode de démarrage), le switch optique 11 est en position P12 pour guider le signal lumineux sur la deuxième fibre optique de mesure 52 comprenant la deuxième suite de réseaux de Bragg.

A l'étape E22 (correspondant à un second mode de mesure), le switch optique 11 est commuté en position P22 afin que le signal lumineux fasse des allers-retours entre le miroir 19 compris dans la fibre optique de réflexion 7 et la deuxième suite de réseaux de Bragg comprise dans la deuxième fibre optique de mesure 52.

A l'étape E23 (correspondant à un second mode de détection), le switch optique 11 est re-commuté en position P12 afin que le signal lumineux aille vers le détecteur via le circulateur.

Ce mode opératoire permet donc d'interroger deux fibres à réseaux de Bragg avec un switch 2x2. De manière générale, on peut avoir un nombre quelconque N supérieur ou égal à 1 de sources optiques 3 et de fibres optique de réflexion 7, ainsi qu'un nombre quelconque M de fibres optiques de mesure 5 avec M>N, avec un switch optique multiple 2NxM comme illustré sur la Fig. 2A.

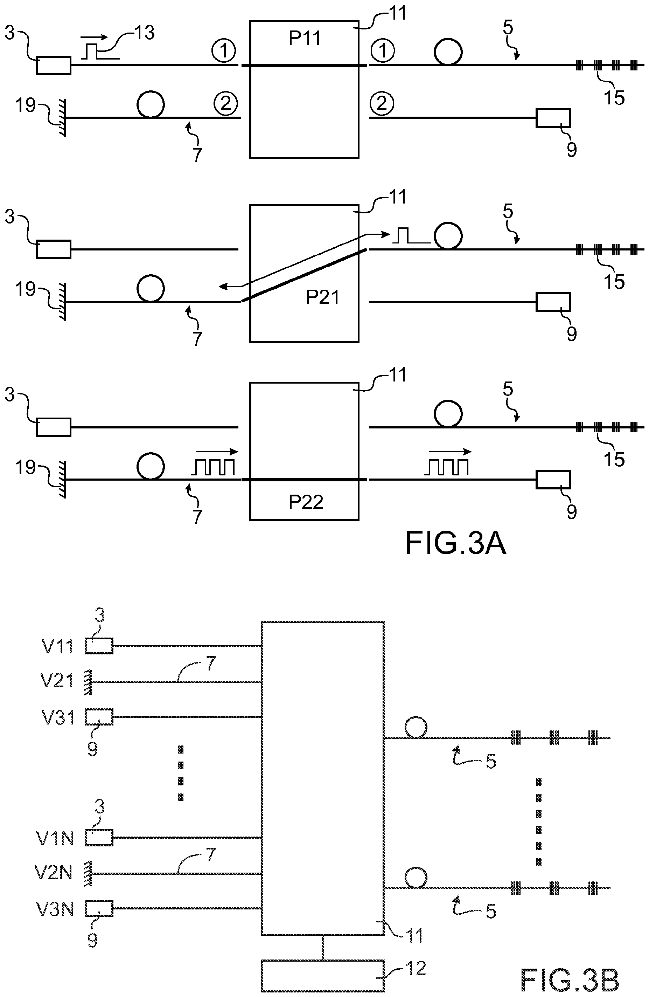

Les Figs. 3A et 3B illustrent très schématiquement des variantes d'un dispositif d'interrogation spectral, selon un deuxième mode préféré de réalisation de l'invention.

Selon ce deuxième mode de réalisation, le dispositif d'interrogation spectral 1 ne comporte pas de circulateur. En effet, un des bras du switch optique 11 est utilisé comme bras de détection permettant ainsi, de s'affranchir de l'utilisation d'un circulateur.

Dans ce cas, le switch optique 11 est configuré pour commuter le passage du signal lumineux selon trois connexions. Lors de la première connexion la fibre optique de mesure 5 est connectée à la source optique 3 correspondante conformément au mode de démarrage. Lors de la deuxième connexion la fibre optique de mesure 5 est connectée à une fibre optique de réflexion 7 correspondante conformément au mode de mesure. Lors de la troisième connexion, la fibre optique de réflexion 7 est connectée au détecteur 9 correspondant conformément au mode de détection.

Plus particulièrement, la Fig. 3A montre un schéma synoptique d'un dispositif d'interrogation spectral 1 comportant une seule source optique 3, une fibre optique de mesure 5, une fibre optique de réflexion 7, un détecteur 9, et un switch optique 11 multiple 2x2 contrôlé par un driver paramétrable 12.

Selon cet exemple, les premier et deuxième bras d'un premier côté du switch sont connectable à la source optique 3 et à la fibre optique de réflexion 7, respectivement. Les premier et deuxième bras d'un second côté du switch sont connectable à la fibre optique de mesure 5 et au détecteur 9, respectivement. Ainsi, en utilisant un bras du switch optique 11 comme bras de détection, on simplifie le montage et on réduit le nombre de composants.

Lors de la première connexion, le switch optique 11 est par défaut sur la position P11. Ainsi, lorsqu'un signal lumineux 13 large bande est émis par la source optique 3, ce signal lumineux passe via le switch optique 11 vers la fibre de mesure 5 comprenant la suite de réseaux de Bragg 15.

Lors de la deuxième connexion, le switch optique passe en position P21. Alors, le signal lumineux 13 est réfléchi sur les réseaux de Bragg 15 et retourne vers la fibre de réflexion 7 comprenant l'élément totalement réfléchissant 19. Le signal lumineux fait des allers-retours dans la ligne de couplage entre les fibres optiques de mesure 5 et de réflexion 7. Une fois que le nombre minimal d'allers-retours est atteint, le dispositif 1 passe dans la configuration de la troisième connexion.

Lors de cette troisième connexion, le switch optique 11 passe en position P22 de sorte que les bandes 17 de différentes longueurs d'ondes du signal lumineux soient dirigée vers le détecteur 9.

La Fig. 3B montre un schéma synoptique d'un dispositif d'interrogation spectral comportant N sources optiques 3, N fibres optique de réflexion 7, N détecteurs 9, M fibres optiques de mesure 5, un switch optique 11, et un driver paramétrable 12.

Plus particulièrement, ce dispositif comporte un ensemble de N premières voies V11-V1N de fibres optiques, un ensemble de N deuxièmes voies V21-V2N de fibres optiques, un ensemble de M troisièmes voies V31-V3M de fibres optiques, un ensemble de N quatrièmes voies V41-V4N de fibres optiques, et un switch optique 11 multiple contrôlé par un driver paramétrable 12. Comme précédemment, N est un entier supérieur ou égal à 1 et M est un entier supérieur ou égal à N.

Chacune des voies de l'ensemble de N premières voies V11-V1N de fibres optiques comporte une source optique 3. L'ensemble de N deuxièmes voies V21-V2N de fibres optiques correspondent à N fibres optiques de réflexion 7. L'ensemble de M troisièmes voies V31-V3M de fibres optiques correspondent à M fibres optiques de mesure 5. L'ensemble de N quatrièmes voies V41-V4N de fibres optiques comporte N détecteurs 9, respectivement.

A titre d'exemple, l'ensemble de N premières voies V11-V1N de fibres optiques et l'ensemble de N deuxièmes voies V21-V2N de fibres optiques sont connectables à un premier côté du switch optique 11. L'ensemble de M troisièmes voies V31-V3M de fibres optiques sont connectables à un second côté du switch optique 11. L'ensemble de N quatrièmes voies V41-V4N de fibres optiques peut être connecté au premier ou au second côté du switch optique 11. En variante, une partie de l'ensemble de N quatrièmes voies V41-V4N de fibres optiques peut être connecté au premier côté du switch optique 11 et l'autre partie au second côté du switch optique. Bien entendu, d'autres configurations ou combinaisons sont possibles selon le nombre de bras des premier et second côtés du switch optique utilisé.

Le switch optique 11 multiple (ou plusieurs switches) est configuré pour connecter entre eux les différentes premières voies, deuxièmes voies, troisièmes voies et quatrièmes voies selon les trois modes opératoires de démarrage, de mesure et de détection et en associant l'ensemble de N premières voies à l'ensemble de N deuxièmes voies et à l'ensemble de N quatrième voies pour interroger les réseaux de Bragg compris dans l'ensemble de M troisièmes voies.

La Fig. 4 illustre de manière schématique un capteur de mesure d'un paramètre physique par réseaux de Bragg, selon un mode de réalisation de l'invention.

Le capteur 61 comporte un dispositif d'interrogation spectral 1 selon les modes de réalisation décrits ci-dessus. Ce capteur 61 est configuré pour mesurer un paramètre physique (par exemple, température, déformation, déplacement, etc.) à partir des variations des bandes de longueurs d'ondes de Bragg 15.

En effet, une variation du paramètre physique engendre une modulation du réseau de Bragg et donc une variation des positions des bandes de longueurs d'ondes par rapport à une position de référence. L'amplitude de cette variation est représentative du paramètre physique à mesurer.

Ainsi, l'invention présente plusieurs avantages par rapport à l'état de l'art. Un premier avantage concerne le fait que la position spectrale des réseaux de Bragg est complétement libre ou arbitraire. Il n'est pas nécessaire de fixer les longueurs d'onde dans des intervalles spécifiques. Contrainte que l'on retrouve dans les méthodes de multiplexage temporel à base de retard spectral selon l'art antérieur.

Un deuxième avantage est le fait que la longueur de fibre optique nécessaire est plus faible étant donné que l'on utilise la fibre optique de mesure comme élément permettant de générer le retard entre les réseaux de Bragg. On notera que dans les méthodes de multiplexage temporel à base de retard spectral, il est nécessaire d'avoir plusieurs dizaines de mètres de fibres optiques. Cette forte longueur complique l'intégration et le montage.

Un troisième avantage est le fait que la distance minimale possible entre deux réseaux de Bragg consécutifs peut être faible en adaptant le nombre d'allers-retours. La limite réside uniquement dans le fait qu'à chaque aller-retour, la puissance optique est diminuée. Ainsi, pour maintenir un niveau optique suffisant on peut soit se limiter à une dizaine d'aller-retour soit utiliser une source optique plus puissante et dans ce cas on peut augmenter le nombre d'allers-retours.

Un quatrième avantage est le fait que le dispositif selon l'invention est dynamique. Il est possible d'adapter très simplement le nombre d'allers-retours du pulse de lumière. Ceci n'est pas possible selon l'état de l'art étant donné que le retard est fixé par la longueur de fibre qui elle est figée.

Bien entendu, diverses modifications peuvent être apportées par l'homme du métier à l'invention qui vient d'être décrite, uniquement à titre d'exemples non limitatifs.

## Revendications

1. Dispositif d'interrogation spectral de longueurs d'ondes de Bragg, comportant :
- au moins une source optique (3) configurée pour émettre un signal lumineux (13),
- au moins une fibre optique de mesure (5) comprenant une suite de réseaux de Bragg (15) successifs configurés pour réfléchir le signal lumineux selon des bandes de longueurs d'ondes différentes,
- au moins une fibre optique de réflexion (7) comprenant un élément de réflexion totale (19),
- au moins un détecteur (9) de longueurs d'ondes, et
- au moins un switch optique (11) configuré pour commuter le passage du signal lumineux entre ladite au moins une source optique (3), ladite au moins une fibre optique de mesure (5), ladite au moins une fibre optique de réflexion (7), et ledit au moins un détecteur (9) selon une séquence de trois modes opératoires comprenant un premier mode, dit mode de démarrage, dans lequel le signal lumineux émis par une source optique (3) donnée est guidé depuis ladite source optique vers une fibre optique de mesure (5) correspondante, un deuxième mode, dit mode de mesure, dans lequel ledit signal lumineux est guidé pour faire un nombre prédéterminé d'aller-retour dans une ligne formée par un couplage entre ladite fibre optique de mesure (5) et une fibre optique de réflexion (7) correspondante, générant ainsi un retard prédéterminé entre les réseaux de Bragg successifs, et un troisième mode, dit mode de détection, dans lequel ledit signal lumineux est guidé vers un détecteur (9) correspondant qui est configuré pour mesurer successivement les bandes de longueurs d'ondes associées aux réseaux de Bragg compris dans ladite fibre de mesure.

2. Dispositif selon la revendication 1, **caractérisé en ce qu'**il comporte au moins un driver paramétrable (12) configuré pour commander la commutation du switch optique (11) lors des modes de démarrage, de mesure et de détection selon des paramètres prédéterminés.

3. Dispositif selon la revendication 2, **caractérisé en ce que** ledit au moins un driver paramétrable (12) est configuré pour contrôler le nombre prédéterminé d'aller-retour du signal lumineux lors du mode de mesure en fonction de la distance entre les réseaux de Bragg (15) et la cadence de mesure du détecteur (9).

4. Dispositif selon l'une quelconque des revendications précédentes, **caractérisé en ce que** ladite au moins une source optique (3) est une source de signaux lumineux à large bande spectrale dont la largeur est entre environ 10 nm et environ 150 nm, la période d'un pulse de lumière étant comprise entre environ 10 ns et environ 100 ns.

5. Dispositif selon la revendication 4, **caractérisé en ce que** ladite au moins une source optique (3) est une source large bande configurée pour émettre à chaque instant d'émission, un signal lumineux comprenant toutes les longueurs d'ondes de la bande spectrale.

6. Dispositif selon l'une quelconque des revendications précédentes, **caractérisé en ce qu'**il comporte des longueurs supplémentaires (21) de fibres optiques configurées pour tenir compte du temps de propagation du signal lumineux ainsi que du temps de commutation du switch optique.

7. Dispositif selon l'une quelconque des revendications précédentes, **caractérisé en ce qu'**il comporte au moins un circulateur (23) configuré pour coupler ladite fibre optique de mesure à ladite source correspondante lors du mode de démarrage et pour coupler ladite fibre optique de mesure (5) audit détecteur (9) correspondant lors du mode de détection.

8. Dispositif selon la revendication 7, **caractérisé en ce que** ledit au moins un switch optique (11) est configuré pour commuter le passage du signal lumineux selon deux commutations dont une première commutation dans laquelle ladite fibre optique de mesure (5) est connectée à ladite source (3) correspondante via le circulateur (23) correspondant conformément au mode de démarrage, une deuxième commutation dans laquelle ladite fibre optique de mesure (5) est connectée à ladite fibre optique de réflexion (7) correspondante conformément au mode de mesure, et un retour à la première commutation, dans laquelle ladite fibre optique de mesure (5) est connectée audit détecteur (9) correspondant via ledit circulateur (23) conformément au mode de détection.

9. Dispositif selon la revendication 7 ou 8, **caractérisé en ce qu'**il comporte :
- un ensemble de N premières voies (V11-V1N) de fibres optiques, dont chacune comporte une source (3), un circulateur (23), et un détecteur (9),
- un ensemble de N deuxièmes voies (V21-V2N) de fibres optiques, dont chacune correspond à une fibre optique de réflexion (7),
- un ensemble de M troisièmes voies (V31-V3M) de fibres optiques, dont chacune correspond à une fibre optique de mesure (5), et **en ce que**
ledit au moins un switch optique (11) est un switch optique multiple configuré pour connecter entre eux les différentes premières voies, deuxièmes voies et troisièmes voies selon lesdits modes de démarrage, de mesure et de détection et en associant ledit ensemble de N premières voies audit ensemble de N deuxièmes voies pour interroger les réseaux de Bragg compris dans ledit ensemble de M troisièmes voies.

10. Dispositif selon l'une quelconque des revendications 1 à 6, **caractérisé en ce que** ledit au moins un switch optique (11) est configuré pour commuter le passage du signal lumineux selon trois connexions dont une première connexion dans laquelle ladite fibre optique de mesure (5) est connectée à ladite source (3) correspondante conformément au mode de démarrage, une deuxième connexion dans laquelle ladite fibre optique de mesure (5) est connectée à une fibre optique de réflexion (7) correspondante conformément au mode de mesure, et une troisième connexion, dans laquelle ladite fibre optique de réflexion (7) est connectée audit détecteur (9) correspondant conformément au mode de détection.

11. Dispositif selon la revendication 10, **caractérisé en ce qu'**il comporte :
- un ensemble de N premières voies (V11-V1N) de fibres optiques, dont chacune comporte une source,
- un ensemble de N deuxièmes voies (V21-V2N) de fibres optiques, dont chacune correspond à une fibre optique de réflexion,
- un ensemble de M troisièmes voies (V31-V3M) de fibres optiques, dont chacune correspond à une fibre optique de mesure (5), et
- un ensemble de N quatrième voies (V41-V4N) de fibres optiques, dont chacune comporte un détecteur, et **en ce que**
ledit au moins un switch optique (11) est un switch multiple configuré pour connecter entre eux les différentes premières voies, deuxièmes voies, troisièmes voies et quatrièmes voies selon lesdits modes de démarrage, de mesure et de détection et en associant ledit ensemble de N premières voies audit ensemble de N deuxièmes voies et audit ensemble de N quatrième voies pour interroger les réseaux de Bragg compris dans ledit ensemble de M troisièmes voies.

12. Capteur comportant un dispositif selon l'une quelconque des revendications précédentes, ledit capteur (61) étant configuré pour mesurer un paramètre physique à partir des variations des bandes de longueurs d'ondes de Bragg.

## Patentansprüche

1. Vorrichtung zur spektralen Abfrage von Bragg-Wellenlängen, die Folgendes umfasst:
- mindestens eine optische Quelle (3), die dazu konfiguriert ist, ein Lichtsignal (13) zu emittieren,
- mindestens einen Messlichtwellenleiter (5), die eine Reihe aufeinanderfolgender Bragg-Gitter (15) umfasst, die dazu konfiguriert sind, das Lichtsignal in verschiedenen Wellenlängenbändern zu reflektieren,
- mindestens einen Reflexionslichtwellenleiter (7), der ein Element (19) der Totalreflexion umfasst,
- mindestens einen Wellenlängendetektor (9), und
- mindestens einen optischen Schalter (11), der dazu konfiguriert ist, den Durchlass des Lichtsignals zwischen der mindestens einen optischen Quelle (3), dem mindestens einen Messlichtwellenleiter (5), dem mindestens einen Reflexionslichtwellenleiter (7) und dem mindestens einen Detektor (9) in einer Abfolge von drei Betriebsmodi zu schalten, die einen ersten Modus, den sogenannten Startmodus, bei dem das von einer gegebenen optischen Quelle (3) emittierte Lichtsignal von der optischen Quelle zu einem entsprechenden Messlichtwellenleiter (5) hin geleitet wird, einen zweiten Modus, den sogenannten Messmodus, bei dem das Lichtsignal so geleitet wird, dass es eine vorbestimmte Anzahl von Hin- und Rückläufen in einer Leitung durchführt, die durch eine Kopplung zwischen dem Messlichtwellenleiter (5) und einem entsprechenden Reflexionslichtwellenleiter (7) gebildet wird, wodurch eine vorbestimmte Verzögerung zwischen den aufeinanderfolgenden Bragg-Gittern erzeugt wird, und einen dritten Modus, den sogenannten Detektionsmodus, umfassen, bei dem das Lichtsignal zu einem entsprechenden Detektor (9) hin geleitet wird, der dazu konfiguriert ist, die Wellenlängenbänder nacheinander zu messen, die mit den in der Messfaser enthaltenen Bragg-Gittern verknüpft sind.

2. Vorrichtung nach Anspruch 1, **dadurch gekennzeichnet, dass** sie mindestens einen parametrierbaren Treiber (12) umfasst, der dazu konfiguriert ist, das Schalten des optischen Schalters (11) während des Start-, des Mess- und des Detektionsmodus entsprechend den vorbestimmten Parametern zu steuern.

3. Vorrichtung nach Anspruch 2, **dadurch gekennzeichnet, dass** der mindestens eine parametrierbare Treiber (12) dazu konfiguriert ist, die vorbestimmte Anzahl von Hin- und Rückläufen des Lichtsignals während des Messmodus in Abhängigkeit von dem Abstand zwischen den Bragg-Gittern (15) und der Messrate des Detektors (9) festzulegen.

4. Vorrichtung nach einem der vorhergehenden Ansprüche, **dadurch gekennzeichnet, dass** die mindestens eine optische Quelle (3) eine Quelle von Lichtsignalen mit einem breiten Spektralband ist, dessen Breite zwischen ungefähr 10 nm und ungefähr 150 nm liegt, wobei die Periode eines Lichtimpulses zwischen ungefähr 10 ns und ungefähr 100 ns beträgt.

5. Vorrichtung nach Anspruch 4, **dadurch gekennzeichnet, dass** die mindestens eine optische Quelle (3) eine Breitbandquelle ist, die dazu konfiguriert ist, zu jedem Emissionszeitpunkt ein Lichtsignal zu emittieren, das alle Wellenlängen des Spektralbands umfasst.

6. Vorrichtung nach einem der vorhergehenden Ansprüche, **dadurch gekennzeichnet, dass** sie zusätzliche Längen (21) von Lichtwellenleitern umfasst, die dazu konfiguriert sind, die Ausbreitungszeit des Lichtsignals sowie die Schaltzeit des optischen Schalters zu berücksichtigen.

7. Vorrichtung nach einem der vorhergehenden Ansprüche, **dadurch gekennzeichnet, dass** sie mindestens einen Zirkulator (23) umfasst, der dazu konfiguriert ist, den Messlichtwellenleiter während des Startmodus mit der entsprechenden Quelle zu koppeln und den Messlichtwellenleiter (5) während des Detektionsmodus mit dem entsprechenden Detektor (9) zu koppeln.

8. Vorrichtung nach Anspruch 7, **dadurch gekennzeichnet, dass** der mindestens eine optische Schalter (11) dazu konfiguriert ist, den Durchlass des Lichtsignals in zwei Schaltvorgängen zu schalten, darunter ein erster Schaltvorgang, bei dem der Messlichtwellenleiter (5) gemäß dem Startmodus über den entsprechenden Zirkulator (23) mit der entsprechenden Quelle (3) verbunden wird, ein zweiter Schaltvorgang, bei dem der Messlichtwellenleiter (5) gemäß dem Messmodus mit dem entsprechenden Reflexionslichtwellenleiter (7) verbunden wird, und eine Rückkehr zum ersten Schaltvorgang, bei dem der Messlichtwellenleiter (5) gemäß dem Detektionsmodus über den Zirkulator (23) mit dem entsprechenden Detektor (9) verbunden wird.

9. Vorrichtung nach Anspruch 7 oder 8, **dadurch gekennzeichnet, dass** sie Folgendes umfasst:
- einen Satz von N ersten Lichtwellenleiterwegen (V11-V1N), von denen jeder eine Quelle (3), einen Zirkulator (23) und einen Detektor (9) umfasst,
- einen Satz von N zweiten Lichtwellenleiterwegen (V21-V2N), von denen jeder einem Reflexionslichtwellenleiter (7) entspricht,
- einen Satz von M dritten Lichtwellenleiterwegen (V31-V3M), von denen jeder einem Messlichtwellenleiter (5) entspricht, und dadurch, dass
der mindestens eine optische Schalter (11) ein optischer Mehrfachschalter ist, der dazu konfiguriert ist, die verschiedenen ersten Wege, zweiten Wege und dritten Wege entsprechend dem Start-, dem Mess- und dem Detektionsmodus miteinander zu verbinden und dabei den Satz von N ersten Wegen mit dem Satz von N zweiten Wegen zu verknüpfen, um die im Satz von M dritten Wegen enthaltenen Bragg-Gitter abzufragen.

10. Vorrichtung nach einem der Ansprüche 1 bis 6, **dadurch gekennzeichnet, dass** der mindestens eine optische Schalter (11) dazu konfiguriert ist, den Durchlass des Lichtsignals entsprechend drei Verbindungen zu schalten, darunter eine erste Verbindung, bei der der Messlichtwellenleiter (5) gemäß dem Startmodus mit der entsprechenden Quelle (3) verbunden ist, eine zweite Verbindung, bei der der Messlichtwellenleiter (5) gemäß dem Messmodus mit einem entsprechenden Reflexionslichtwellenleiter (7) verbunden ist, und eine dritte Verbindung, bei der der Reflexionslichtwellenleiter (7) gemäß dem Detektionsmodus mit dem entsprechenden Detektor (9) verbunden ist.

11. Vorrichtung nach Anspruch 10, **dadurch gekennzeichnet, dass** sie Folgendes umfasst:
- einen Satz von N ersten Lichtwellenleiterwegen (V11-V1N), von denen jeder eine Quelle umfasst,
- einen Satz von N zweiten Lichtwellenleiterwegen (V21-V2N), von denen jeder einem Reflexionslichtwellenleiter entspricht,
- einen Satz von M dritten Lichtwellenleiterwegen (V31-V3N), von denen jeder einem Messlichtwellenleiter (5) entspricht, und
- einen Satz von N vierten Lichtwellenleiterwegen (V41-V4N), von denen jeder einen Detektor umfasst, und dadurch, dass
der mindestens eine optische Schalter (11) ein Mehrfachschalter ist, der dazu konfiguriert ist, die verschiedenen ersten Wege, zweiten Wege, dritten Wege und vierten Wege entsprechend dem Start-, dem Mess- und dem Detektionsmodus miteinander zu verbinden und dabei den Satz von N ersten Wegen mit dem Satz von N zweiten Wegen und dem Satz von N vierten Wegen zu verknüpfen, um die in dem Satz von M dritten Wegen enthaltenen Bragg-Gitter abzufragen.

12. Sensor, der eine Vorrichtung nach einem der vorhergehenden Ansprüche umfasst, wobei der Sensor (61) dazu konfiguriert ist, einen physikalischen Parameter anhand der Veränderungen der Bragg-Wellenlängenbänder zu messen.

## Claims

1. Bragg wavelength spectral interrogation device, having:
- at least one optical source (3) designed to emit a light signal (13),
- at least one measurement optical fibre (5) comprising a series of successive Bragg gratings (15) designed to reflect the light signal in different wavelength bands,
- at least one reflective optical fibre (7) comprising a total reflection element (19),
- at least one wavelength detector (9), and
- at least one optical switch (11) designed to switch the passage of the light signal between said at least one optical source (3), said at least one measurement optical fibre (5), said at least one reflective optical fibre (7), and said at least one detector (9) according to a sequence of three operating modes comprising a first mode, known as start-up mode, in which the light signal emitted by a given optical source (3) is guided from said optical source to a corresponding measurement optical fibre (5), a second mode, known as measurement mode, in which said light signal is guided to make a predetermined number of return trips in a line formed by a coupling between said measurement optical fibre (5) and a corresponding reflective optical fibre (7), thus generating a predetermined delay between the successive Bragg gratings, and a third mode, known as detection mode, in which said light signal is guided to a corresponding detector (9) which is designed to successively measure the wavelength bands associated with the Bragg gratings comprised in said measurement fibre.

2. Device according to Claim 1, **characterized in that** it includes at least one parameterizable driver (12) designed to control the switching of the optical switch (11) during start-up, measurement and detection modes according to predetermined parameters.

3. Device according to Claim 2, **characterized in that** said at least one parameterizable driver (12) is designed to control the predetermined number of return trips of the light signal during the measurement mode as a function of the distance between the Bragg gratings (15) and the measurement rate of the detector (9).

4. Device according to any one of the preceding claims, **characterized in that** said at least one optical source (3) is a source of light signals with a wide spectral band whose width is between approximately 10 nm and approximately 150 nm, the period of a light pulse being between approximately 10 ns and approximately 100 ns.

5. Device according to Claim 4, **characterized in that** said at least one optical source (3) is a broadband source designed to emit, at each emission time, a light signal comprising all the wavelengths of the spectral band.

6. Device according to any one of the preceding claims, **characterized in that** it includes additional lengths (21) of optical fibres designed to take account of the propagation time of the light signal as well as the switching time of the optical switch.

7. Device according to any one of the preceding claims, **characterized in that** it includes at least one circulator (23) designed to couple said measurement optical fibre to said corresponding source during the start-up mode and to couple said measurement optical fibre (5) to said corresponding detector (9) during the detection mode.

8. Device according to Claim 7, **characterized in that** said at least one optical switch (11) is designed to switch the passage of the light signal in two switching operations, including a first switching operation in which said measurement optical fibre (5) is connected to said corresponding source (3) via the corresponding circulator (23) in accordance with the start-up mode, a second switching operation in which said measurement optical fibre (5) is connected to said corresponding reflective optical fibre (7) in accordance with the measurement mode, and a return to the first switching operation, in which said measurement optical fibre (5) is connected to said corresponding detector (9) via said circulator (23) in accordance with the detection mode.

9. Device according to Claim 7 or 8, **characterized in that** it includes:
- a set of N first optical fibre channels (V11-V1N), each of which includes a source (3), a circulator (23), and a detector (9),
- a set of N second optical fibre channels (V21-V2N), each of which corresponds to a reflective optical fibre (7),
- a set of M third optical fibre channels (V31-V3M), each of which corresponds to a measurement optical fibre (5), and **in that**
said at least one optical switch (11) is a multiple optical switch designed to connect together the different first channels, second channels and third channels according to said start-up, measurement and detection modes and associating said set of N first channels with said set of N second channels to interrogate the Bragg gratings comprised in said set of M third channels.

10. Device according to any one of Claims 1 to 6, **characterized in that** said at least one optical switch (11) is designed to switch the passage of the light signal according to three connections, including a first connection in which said measurement optical fibre (5) is connected to said corresponding source (3) in accordance with the start-up mode, a second connection in which said measurement optical fibre (5) is connected to a corresponding reflective optical fibre (7) in accordance with the measurement mode, and a third connection, in which said reflective optical fibre (7) is connected to said corresponding detector (9) in accordance with the detection mode.

11. Device according to Claim 10, **characterized in that** it includes:
- a set of N first optical fibre channels (V11-V1N), each of which includes a source,
- a set of N second optical fibre channels (V21-V2N), each of which corresponds to a reflective optical fibre,
- a set of M third optical fibre channels (V31-V3M), each of which corresponds to a measurement optical fibre (5), and
- a set of N fourth optical fibre channels (V41-V4N), each of which includes a detector, and **in that** said at least one optical switch (11) is a multiple switch designed to connect together the different first channels, second channels, third channels and fourth channels according to said start-up, measurement and detection modes and associating said set of N first channels with said set of N second channels and said set of N fourth channels to interrogate the Bragg gratings comprised in said set of M third channels.

12. Sensor including a device according to any one of the preceding claims, said sensor (61) being designed to measure a physical parameter from variations in Bragg wavelength bands.
